# EUROPÄISCHE PATENTANMELDUNG

(11) **EP 1 090 894 A1**
(43) Veröffentlichungstag der Anmeldung: **11.04.2001**
(21) Anmeldenummer: 00121747.0
(22) Anmeldetag: 05.10.2000
(51) Int. Cl.: C06B 21/00, B01J 2/04

(54) **Verfahren zur Herstellung feinpartikulärer Explosivstoffe**

(30) Priorität: 06.10.1999 DE 19948133
(71) Anmelder: Fraunhofer-Gesellschaft zur Förderung der angewandten Forschung e.V., 80636 München (DE)
(72) Erfinder: Teipel, Ulrich, 76327 Pfinztal (DE); Krause, Horst, Dr. rer. nat., 76327 Pfinztal (DE); Kröber, Hartmut, Dipl.-Ing., 76131 Karlsruhe (DE); Förter-Barth, Ulrich, Dipl.-Ing., 76131 Karlsruhe (DE)
(74) Vertreter: Lichti, Heiner, Dipl.-Ing.

(57) **Zusammenfassung**

Zur Herstellung feindisperser kristalliner Explosivstoffe wird der Explosivstoff in einem organischen Lösungsmittel in Lösung gebracht, die Lösung in ein mit dem Lösungmittel mischbares überkritisches Fluid, in welchem der Explosivstoff nicht löslich ist, eingesprüht, das Lösungsmittel unter Auskristallisieren der Explosivstoff-Partikel von dem überkritischen Fluid aufgenommen und werden die Explosivstoff-Partikel nach Expandieren in einen für das überkritische Fluid unterkritischen Zustand abgetrennt. Die Lösung wird in einer Düsenströmung in das überkritsche Fluid eingesprüht, wobei die Lösung mittels einer Mehrstoffdüse oder durch einen Düsenkanal einer Mehrstoffdüse in das überkritische Fluid eingesprüht wird, während in einem weiteren Düsenkanal der Mehrstoffdüse ein Fluid zugeführt wird. Mit diesem Verfahren werden feine Explosivstoffpartikel mit definierter mittlerer Partikelgröße, enger Partikelgrößenverteilung und hoher Schüttdichte erhalten.

## Beschreibung

Die Erfindung betrifft ein Verfahren zur Herstellung feindisperser kristalliner Explosivstoffe, indem der Explosivstoff in wenigstens einem organischen Lösungsmittel in Lösung gebracht, die Lösung in wenigstens ein mit dem organischen Lösungsmittel zumindest teilweise mischbares überkrititsches Fluid, in welchem der Explosivstoff nicht oder nur gering löslich ist, in einer Düsenströmung eingesprüht, das Lösungsmittel unter Auskristallisieren der Expolsivstoff-Partikel von dem überkritischen Fluid aufgenommen wird und die Explosivstoff-Partikel nach Expandieren in einen für das überkritische Fluid unterkritischen Zustand abgetrennt werden.

Bei der Synthese kristalliner Explosivstoffe entstehen in der Regel sehr unregelmäßige und grobe Partikel. Da bei der Anwendung bzw. bei der Verarbeitung Partikel mit definierter mittlerer Partikelgröße, enger Partikelgrößenverteilung und hoher Schüttdichte erwünscht sind, ist es bekannt, die Korneigenschaften, insbesondere die Kornform, durch Umkristallisation der kristallinen Explosivstoffe aus einer Lösung zu verbessern. Hierbei wird der kristalline Explosivstoff meist unter Erwärmen in einem oder mehreren geeigneten Lösungsmitteln gelöst und durch definiertes Abkühlen der Explosivstoff auskristallisiert. Dieser Vorgang kann gegebenenfalls mehrfach durchgeführt werden. Infolge der Löslichkeitsunterschiede zwischen Explosivstoff und gegebenenfalls vorhandener Verunreinigungen werden unerwünschte Begleitstoffe abgetrennt, weil sie entweder von vorneherein ungelöst bleiben und abgetrennt werden können oder, wenn sie in Lösung gehen, aufgrund ihrer geringen Konzentration in dem Lösungsmittel verbleiben, wenn das Kristallisat bereits ausgefallen ist.

Die Kristallisation ist ein bekanntes thermisches Gewinnungs- oder Trennverfahren, wobei eine Komponente eines aus wenigstens zwei Komponenten bestehenden homogenen Systems, beispielsweise einer Lösung, einer Schmelze oder eines Gasgemischs, unter Bildung einer festen Phase abgetrennt wird. Bei der Kristallisation eines oder mehrerer Feststoffe aus einer Lösung mit molekulardisperser Verteilung der Feststoffe in einem Lösungsmittel wird die Lösung durch Kühlen (Kühlungskristallisation), Verdampfen des Lösungsmittels (Verdampfungskristallisation) oder Kombination beider Varianten übersättigt, wobei durch Abbau dieser Übersättigung der überschüssige Feststoff als Kristallisat anfällt, das mechanisch von der Restlösung abtrennbar ist. Die Übersättigung kann durch Unterdruck (Vakuumkristallisation), Aussalzen, Ausfällen, gegebenenfalls durch Zugabe von Impfkeimen oder Zuführung von mechanischer Energie (Agitation) unterstützt werden. Nachteilig bei den bekannten Kristallisationsverfahren, wie der Kühlungs- und der Verdampfungskristallisation, ist einerseits, daß die umkristallisierten Partikel häufig einen Restgehalt des zur Umkristallisation verwendeten Lösungsmittels aufweisen, andererseits muß das Lösungsmittel zum Erhalt von feinpartikulären und folglich reinen Kristallen möglichst schnell abgezogen werden, was mit herkömmlichen Verfahren zumeist nur bedingt möglich ist. Dies gilt insbesondere für gegenüber thermischer und mechanischer Beanspruchung empfindlichen Explosivstoffen.

Die US 5 360 478 A beschreibt ein Verfahren zur Herstellung von im wesentlichen fehlstellenfreien Kristallen des Explosivstoffs Cyclotrimethylentrinitramin (Hexogen, RDX), indem Hexogen in einem Lösungsmittel, insbesondere Aceton oder Cyclohexanon, gelöst und das Lösungsmittel durch Einblasen eines Gases, welches in dem Lösungsmittel löslich ist und in welchem Hexogen nicht löslich ist, insbesondere Kohlendioxid, übersättigt wird, wobei das Hexogen ausgefällt wird.

Der US 5 389 263 A ist ein Verfahren zum Trennen von Mischungen aus kristallinen Substanzen, z.B. einer Explosivstoffmischung aus Hexogen (RDX) und Oktogen (HMX) entnehmbar, indem die Mischung in einem Lösungsmittel gelöst und der Lösung ein gasförmiges, nahkritisches oder überkritisches Anti-Solvent zugesetzt wird, um eine der gelösten Substanzen auszufällen und abzutrennen.

Die DE 692 26 064 T2 beschreibt ein Verfahren zur Herstellung von Mikropartikeln eines Proteins, indem eine Proteinlösung in ein als Antisolvent dienendes überkritsches Fluid eingesprüht wird. Die Proteinpartikel werden anschließend zum Zwecke einer retardierten Freisetzung bei Verabreichung derselben in eine Polymermatrix eindispergiert.

Schließlich sind Verfahren zur Herstellung feiner Partikel aus kristallinen Feststoffen, wie Explosivstoffen, Pharmazeutika oder dergleichen, bekannt (DE 689 07 062 T2, US 5 874 029 A), indem die Feststoffe in einem Lösungsmittel gelöst und die Lösung mittels einer Düse in ein Antisolvent zur Rekristallisation des Feststoffs eingesprüht werden. Als Antisolvent können jeweils überkritische Fluide eingesetzt werden.

Die bekannten Verfahren ermöglichen zwar die Herstellung von kristallinen Partikeln mit gegenüber mittels Kühlungs-, Verdampfungs-, oder Vakuumkristallisation hergestellten Partikeln erhöhter Reinheit und Regelmäßigkeit; gleichwohl besteht die Gefahr der Bildung von Fehlstellen und/oder Einschlüssen von Gasen im Kristallgefüge, was insbesondere bei Explosivstoffen mit einer erhöhten Sensitivität und folglich einem erhöhten Gefährungspotential bei der Handhabung derselben verbunden. Ferner sind der Partikelgröße nach unten hin Grenzen gesetzt.

Der Erfindung liegt die Aufgabe zugrunde, ein Verfahren der eingangs genannten Art dahingehend weiterzubilden, daß es die Herstellung weitestgehend fehlstellenfreier, feindisperser Explosivstoffe hoher Reinheit mit definierten Eigenschaften, wie mittlerer Partikelgröße, enger Partikelgrößenverteilung und hoher Schüttdichte, ermöglicht.

Erfindungsgemäß wird diese Aufgabe bei einem Verfahren der eingangs genannten Art dadurch gelöst, daß die Lösung mittels einer Mehrstoffdüse oder durch wenigstens einen Düsenkanal einer Mehrstoffdüse in das überkritische Fluid eingesprüht wird, während in wenigstens einem weiteren Düsenkanal der Mehrstoffdüse ein Fluid zugeführt wird.

Zumindest einige überkritische Fluide weisen bekanntermaßen für viele Explosivstoffe ein nur geringes Lösevermögen auf, so daß sie bei Einsprühen einer Lösung aus einem oder mehreren Explosivstoffen als Anti-Solvent bzw. als Fällungsmittel wirken. Dies ist insbesondere dann der Fall, wenn eine Explosivstofflösung im Bereich ihrer Sättigung feindispers in ein mit dem organischen Lösungsmittel zumindest teilweise mischbares überkritisches Fluid eingesprüht wird. Hierbei diffundiert einerseits das organische Lösungsmittel in das überkritische Fluid. Die Triebkräfte hierfür sind u.a. der Konzentrationsgradient, wobei unmittelbar nach Einsprühen der Lösung in das überkritische Fluid die Lösungsmittelkonzentration an der Oberfläche eines Lösungsmitteltropfens etwa 100 % beträgt, während in dem den Lösungsmitteltropfen umgebenden überkritischen Fluid die Lösungsmittelkonzentration etwa 0 % beträgt. Andererseits diffundiert das überkritische Fluid in die Lösungsmitteltropfen ein, so daß die Sättigungskonzentration des Explosivstoffs in dem Lösungsmitteltropfen schlagartig überschritten wird und es zu einer spontanen Kristallisation des Explosivstoffs kommt.

Um nun für eine spontane Dispergierung feiner Tropfen der Explosivstofflösung in dem überkritischen Fluid zu sorgen und somit die Bildung gröberer Partikel und insbesondere die Bildung von Einschlüssen des überkritischen Fluids in den erzeugten Partikeln zu verhindern, wird die Lösung erfindungsgemäß über eine Mehrstoffdüse oder durch einen Düsenkanal einer Mehrstoffdüse in das überkritische Fluid eingesprüht, während in einem weiteren Düsenkanal der Mehrstoffdüse das zusätzliche Fluid zugeführt wird. Infolge der Wechselwirkung beider Düsenströmungen treten beim Eintreten der Lösung in das überkritische Fluid erhöhte Turbulenzen bzw. an den Grenzflächen der Lösungsmitteltropfen und des überkritischen Fluids erhöhte Scherkräfte auf, die zu einer feineren Dispergierung der Lösung und folglich zur Erzeugung eines feineren und monodisperseren Tropfenspektrums führen. Hierdurch weisen auch die Feststoffpartikel einen kleineren mittleren Durchmesser und eine engere Partikelgrößenverteilung auf. Insbesondere aufgrund der geringen Partikelgröße sind die feinkristallinen Explosivstoffe weitestgehend fehlstellenfrei, d.h. sie weisen keine oder nur mäßige Kristalldefekte auf. Die erhaltenen Explosivstoff-Partikel zeichnen sich durch eine hohe Reinheit aus und weisen insbesondere weder Reste an organischen Lösungsmitteln noch Einschlüsse von Gasen auf. Durch die schlagartige Überschreitung der Sättigungskonzentration fallen die feinen Explosivstoff-Partikel spontan aus, d. h. es kommt zu keinem Kristallwachstum wie bei den bekannten Kristallisationsverfahren. In dem eingesetzten Explosivstoff gegebenenfalls enthaltene Verunreinigungen werden in der Regel in dem überkritischen Fluid gelöst und somit nicht in die umkristallisierten feinen Partikel eingebaut. Mittels des erfindungsgemäßen Verfahrens ist die Herstellung von Explosivstoffen mit einem mittleren Partikeldurchmesser zwischen etwa 10 nm bis zu etwa 300 µm möglich. Aufgrund der hohen Reinheit der umkristallisierten Partikel müssen diese weder gewaschen noch in anderer Form gereinigt werden.

Zum Abtrennen der gebildeten Explosivstoff-Partikel wird das überkritische Fluid expandiert und in einen unterkritischen Bereich überführt. Wird ein überkritisches Fluid gewählt, welches im unterkritischen Zustand gasförmig ist, so ist auch eine Trocknung der Partikel nicht erforderlich. Mit überkritischem Zustand ist in diesem Zusammenhang ein Zustand unmittelbar an oder oberhalb des kritischen Punktes des jeweiligen Fluides gemeint.

Das erfindungsgemäße Verfahren ist zur Herstellung feiner Partikel der meisten bekannten, bei Raumtemperatur kristallinen Explosivstoffen geeignet, z. B. 2,4,6-Trinitrotoluol (TNT), 1,3,5-Triamino-2,4,6-trinitrobenzol (TATNB), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), Ammoniumdinditramid (ADN), 2,4,6,8,10,12-Hexanitro-2,4,6,8,10,12-hexaazaisowurtzitan (HNIW, auch als CL20 bezeichnet), Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN), Ammoniumnitrat (AN), etc.

Im Falle eines Beaufschlagens zumindest eines Düsenkanals mit einem weiteren Fluid, welches insbesondere bei Kontakt mit der in einem anderen Düsenkanal eingesprühten Lösung zu einer spontanen Kristallisation der Explosivstoff-Partikel beiträgt, ist in bevorzugter Ausführung vorgesehen, daß in dem weiteren Düsenkanal der Mehrstoffdüse ein überkritisches Fluid zugeführt wird, wobei insbesondere dasselbe überkritische Fluid zugeführt werden kann, in welches die Lösung eingesprüht wird. Alternativ oder zusätzlich kann in dem weiteren Düsenkanal der Mehrstoffdüse auch ein Inertgas zugeführt werden, welches mit der Düsenströmung der Lösung in Wechselwirkung tritt und unmittelbar bei Eintreten der Lösung in das überkritische Fluid eine Dispergierung der Lösung in feine Tropfen bewirkt.

Vorzugsweise wird die Lösung unmittelbar nach Austreten aus dem Düsenkanal der Mehrstoffdüse mit der in wenigstens einem benachbarten Düsenkanal zugeführten Lösung oder dem Fluid verwirbelt, wobei mit Vorzug eine Mehrstoffdüse mit einem zentralen Düsenkanal und wenigstens einem diesen im wesentlichen ringförmig umgebenden Düsenkanal oder ein Düsenaggregat mit mehreren solcher Düsen verwendet wird. Alternativ kann die Lösung auch innerhalb des Düsenkanals über wenigstens eine in diesen mündende Zuführleitung mit dem Fluid verwirbelt werden, wobei in diesem Fall der Lösung das Fluid zweckmäßig im Gegenstrom, insbesondere mittels eines T-Mischers, zugeführt wird, um eine hohe Turbulenz beim Eintritt der Lösung in das überkritische Fluid zu erzeugen. Selbstverständlich können auch Mehrstoffdüsen mit im wesentlichen koaxial angeordneten Düsenkanälen eingesetzt werden.

Die Düsenströmung kann beispielsweise mittels einer Mehrstoffdüse nach Art einer Freistrahl-, Kapillardüse oder dergleichen, oder mittels einer Mehrstoffdüse mit wenigstens einem Düsenkanal mit über dessen Länge variierendem Durchmesser, wie einer Lavaldüse, erzeugt werden. Zum Einsprühen des Lösungsmittels in das überkritische Fluid können auch mehrere Düsen bzw. ein Düsenaggregat mit mehreren Düsen verwendet werden, die beispielsweise aus Sintermetallplatten gebildet sein können.

In bevorzugter Ausführung ist vorgesehen, daß die Lösung unmittelbar vor Eintreten in den Düsenkanal, in dem Düsenkanal oder unmittelbar nach Austreten aus demselben mittels Ultraschallenergie in Schwingungen versetzt wird. Durch die Anregung der Lösung mit einer Ultraschallschwingung wird der Strahlzerfall beeinflußt, wobei ein monodisperses Tropfenspektrum entsteht. Dies hat zur Folge, daß auch die entstehenden Partikel monodispers verteilt sind. Durch das Aufbringen einer periodischen Zwangsstörung auf die Düsenströmung der Lösung erfolgt der Strahlzerfall nach dem Rayleigh-Prinzip zu einem gleichmäßigeren Spektrum. Während einerseits die Lösung unmittelbar vor Eintreten in die Düse bzw. unmittelbar nach Austreten aus derselben mit Ultraschallenergie in Schwingungen versetzt werden kann, kann insbesondere auch die Mehrstoffdüse mittels Ultraschallenenergie in Schwingungen versetzt werden, wobei in diesem Fall die vibrierende Düse die Schwingungen auf die sie durchströmende Lösung überträgt.

In bevorzugter Ausführung ist vorgesehen, daß das überkritische Fluid beim Einsprühen der Lösung mit einer Strömung beaufschlagt wird, wobei das überkritische Fluid und die Sprühströmung im Gleich-, im Gegenstrom oder auch im Querstrom geführt werden kann. Auf diese Weise kann der zur Diffusion des überkritischen Fluids in das Lösungsmittel bzw. der zur Diffusion des Lösungsmittels in das überkritische Fluid erforderliche Konzentrationsgradient an der Phasengrenze eines Lösungsmitteltropfens erhöht und durch Variation der Strömungsbedingungen bzw. der Düsengeometrie exakt eingestellt werden. Die Lösung kann z. B. über eine Düsenanordnung in einen kontinuierlich von dem überkritischen Fluid durchströmten Hochdruckbehälter eingesprüht werden.

Während der Expansion des mit dem Lösungsmittel beladenen überkritischen Fluids zum Abtrennen der Explosivstoff-Partikel wird vorzugsweise frisches über- und/oder unterkritisches Fluid zugesetzt, um ein Niederschlagen des von dem überkritischen Fluid aufgenommenen Lösungsmittels an den Partikeln beim Überführen des Fluids in einen unterkritischen Bereich zuverlässig zu verhindern. Im Falle eines kontinuierlich vom überkritischen Fluid durchströmten Hochdruckbehälters kann der Fluidstrom beispielsweise unter gleichzeitigem Entspannen des Behälters aufrechterhalten werden. Im Falle eines diskontinuierlich betriebenen Behälters kann dieser z. B. während der Expansion mit dem Fluid gespült werden.

Als überkritische Fluide kommen alle Stoffe in Frage, die im überkritischen Zustand ein nur geringes Lösungsvermögen für den jeweiligen Explosivstoff und ein hohes Lösungsvermögen für das in Verbindung mit dem jeweiligen Explosivstoff verwendete Lösungsmittel aufweisen. Ist das verwendete Fluid im unterkritischen Zustand gasförmig, so wird es beim Übergang in die Gasphase automatisch von den Partikeln abgetrennt. Es werden vornehmlich Kohlendioxid (CO₂) Distickstoffoxid (N₂O), Stickstoff (N₂), Wasser (H₂O), Ammoniak (NH₃), halogenierte Methane (CHₙX₄₋ₙ mit O ≤ n ≤ 5) oder Ethane (C₂HₘX₆₋ₘ mit O ≤ m ≤ 5), insbesonder fluorierte Methane oder Ethane, z. B. Di- oder Trifluormethan, oder Mischungen hiervon eingesetzt. Bevorzugt werden solche überkritischen Fluide verwendet, welche chemisch weitgehend inert und toxikologisch unbedenklich sind, z. B. CO₂, N₂ oder H₂O. Durch Verwendung von Mischungen überkritischer Fluide kann das Lösevermögen der Mischung sowohl für den Explosivstoff als auch für das Lösungsmittel individuell eingestellt werden. Druck und Temperatur einer solchen Mischung können insbesondere derart eingestellt werden, daß zumindest eine Mischungskomponente im nahkritischen Bereich vorliegt.

Zur Erhöhung des Lösevermögens des oder der überkritischen Fluide für das Lösungsmittel können gegebenenfalls auf an sich bekannte Weise Schleppmittel (Modifier) zugesetzt werden, in welchen der Explosivstoff nicht oder nur gering löslich ist und die beim Expandieren in die Gasphase übergehen.

Alternativ oder zusätzlich ist je nach verwendetem Explosivstoff vorgesehen, daß dem Lösungsmittel zur Erhöhung des Lösevermögens für den Explosivstoff und/oder für das überkritische Fluid ein Lösungsvermittler (Entrainer) zugesetzt wird.

Das erfindungsgemäße Verfahren ist insbesondere auch zur Herstellung von aus wenigstens zwei Explosivstoffen bestehenden Explosivstoff-Partikeln, sogenannten Komposit-Partikeln, geeignet, indem zwei oder mehr Explosivstoffe in dem organischen Lösungsmittel gelöst werden und die Lösung in das überkritische Fluid eingesprüht wird.

Die gewünschte Partikelgröße kann durch Variation der Parameter Druck, Temperatur, Konzentration der Lösung, Art des Lösungsmittels bzw. des überkritischen Fluids und/oder durch Variation der Expansionszeit der Lösung beim Einsprühen in das überkritische Fluid, z. B. durch die Düsengeometrie und die Anströmung der eingesprühten Lösung seitens des überkritischen Fluids, eingestellt werden.

In bevorzugter Ausführung ist vorgesehen, daß das überkritische Fluid rezirkuliert wird.

Im übrigen kann das Verfahren kontinuierlich oder chargenweise durchgeführt werden.

Nachstehend ist die Erfindung anhand von Ausführungsbeispielen unter Bezugnahme auf die Zeichnungen näher erläutert. Es zeigen:
- Fig. 1: eine schematische Schnittansicht einer Ausführungsform einer Zweistoffdüse mit einem einen zentralen Düsenkanal ringförmig umgebenden Düsenkanal;
- Fig. 2: eine schematische Schnittansicht einer alternativen Ausführungsform der Zweistoffdüse gemäß Fig. 1;
- Fig. 3: eine schematische Schnittansicht einer Zweistoffdüse in Form eines T-Mischers und
- Fig. 4: ein Diagramm der Volumendichteverteilung in Abhängigkeit von der Partikelgröße von mittels einer herkömmlichen Einstoffdüse (Kurve B) und einer Zweistoffdüse gemäß Fig. 1 hergestellten Explosivstoff-Partikel aus Hexogen (RDX).

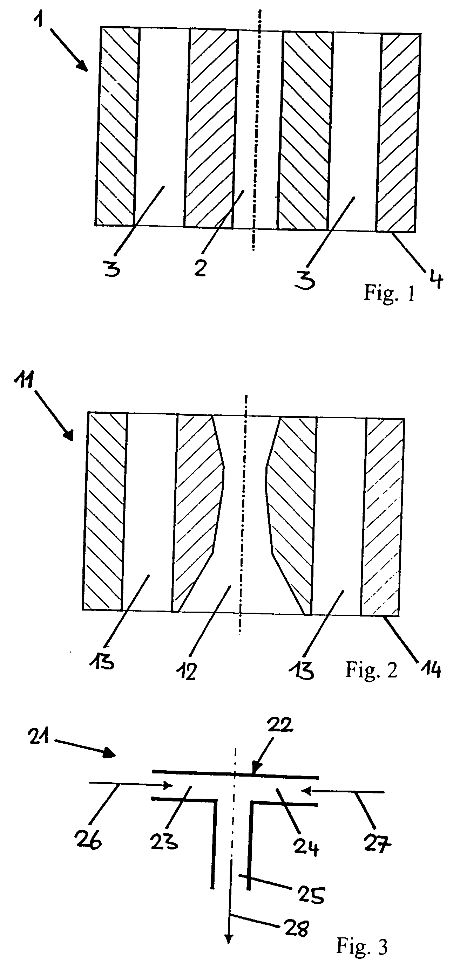

Fig. 1 zeigt eine Zweistoffdüse 1 mit einem zentralen Düsenkanal 2 und einem diesen ringförmig umgebenden Düsenkanal 3 nach Art einer Freistrahldüse. Zur Herstellung feindisperser kristalliner Explosivstoffe wird z. B. eine Lösung des Explosivstoffes durch den zentralen Düsenkanal 2 in ein überkritisches Fluid eingesprüht, während durch den Ringkanal 3 ein Inertgas oder ebenfalls ein überkritisches Fluid eingesprüht wird. Alternativ kann auch die Explosivstofflösung über den Ringkanal 3 und das zusätzliche Fluid über den zentralen Kanal 2 oder die Lösung sowohl über den Ringkanal 3 als auch über den zentralen Kanal 2 eingesprüht werden. In jedem Fall treten an der Abrißkante 4 der Düse 1 durch Wechselwirkung der Düsenströmungen erhöhte Scherkräfte auf, die zu einer Dispergierung der Lösung in feinere Tropfen und insbesondere zur Bildung im wesentlichen reiner und fehlstellenfreier Kristalle führen.

Die in der Fig. 2 dargestellte Zweistoffdüse 11 unterscheidet sich von der Düse 1 gemäß Fig. 1 dadurch, daß sich der Querschnitt des zentralen Düsenkanals 12 nach Art einer Lavoldüse über seine Länge ändert. Auf diese Weise wird die Turbulenz einer über den zentralen Düsenkanal 12 in ein überkritisches Fluid eingesprühten Explosivstofflösung noch erhöht, während aufgrund der Düsenströmung des Ringkanals 13 an der Abrißkante 14 zusätzliche Scherkräfte auftreten, die in einer feineren Dispergierung der Lösung resultieren.

Fig. 3 ist eine Zweistoffdüse 21 mit einem T-förmigen Düsenkanal 22 entnehmbar, der zwei koaxiale Zuführkanäle 23, 24 aufweist, welche in einen bezüglich der Zuführkanäle 23, 24 senkrecht angeordneten Auslaßkanal 25 münden. Auch eine solche Düse nach Art eines T-Mischers trägt zu einer erhöhten Turbulenz der Düsenströmung bei, wobei entweder beide Zuführkanäle 23, 24 mit einer Explosivstofflösung beaufschlagt werden (Pfeile 26, 27), oder es wird einer der Zuführkanäle 26 mit einer Explosivstofflösung beaufschlagt, während der andere Zuführkanal 27 mit einem insbesondere überkritischen Fluid beaufschlagt wird. Beim Austritt der Düsenströmung aus dem Auslaßkanal (Pfeil 28) in ein überkritisches Fluid findet eine schlagartige Bildung feindisperser Explosivstoffpartikel statt.

### Beispiel 1:

2 g Hexanitrostilben (HNS) werden in einem Lösungsmittelgemisch aus 150 ml Dimethylformamid (DMF) und 450 ml Aceton gelöst. Die Lösung wird mittels einer Dosierpumpe mit einem Volumenstrom von 5 ml/min einerseits über eine Lavaldüse mit einem engsten Durchmesser von 100 µm, andererseits über eine Zweistoffdüse gemäß Fig. 1 mit einem Durchmesser der Düsenkanäle von jeweils etwa 100 µm feindispers in einen von überkritischem CO₂ im Gleichstrom durchströmten Hochdruckbehälter mit einem Volumen von 6 l eingesprüht. Der Massenstrom des CO₂ wird jeweils auf 1,7 g/s, der Druck auf 100 bar und die Temperatur auf 50°C eingestellt und jeweils aufrechterhalten. Das Kohlendioxid befindet sich folglich im überkritischen Bereich oberhalb seines kritischen Punktes von 31 °C und 73 bar. Während DMF ein hohes Lösevermögen für HNS aufweist, wirkt Aceton als Lösungsvermittler zwischen CO₂ und dem in überkritischem CO₂ schwerlöslichen DMF. Nach vollständigem Einsprühen der Lösung wird die Dosierpumpe abgestellt und der Hochdruckbehälter 20 min mit reinem CO₂ mit einem Massenstrom von 3,3 g/s unter gleichbleibenden Bedingungen (200 bar, 50°C) gespült, um das in dem CO₂ gelöste DMF und Aceton zu entfernen und eine Adsorption an den gebildeten Explosiv-Partikeln beim Expandieren des Hochdruckbehälters zu verhindern. Anschließend wird der Hochdruckbehälter unter Aufrechterhalten des CO₂-Stroms mit einem Druckgradient von etwa -0,56 bar/s expandiert.

Die mittels der Lavaldüse erzeugen, auf einem Sintermetallfilter abgeschiedenen HNS-Partikel haben eine mittlere Partikelgröße X_{50,3} = 2,5 µm und eine spezifische Oberfläche von etwa 7 m²/g , während die mittels der Zweistoffdüse erzeugten eine mittlere Partikelgröße X_{50,3} von nur 1,5 µm aufweisen und aus nahezu defektfreien Kristallen bestehen. Die Partikel zeichnen sich durch eine hohe Reinheit aus, weisen keine Reste an Lösungsmittel oder Gaseinschlüsse auf und müssen folglich weder gewaschen oder gespült, noch getrocknet werden. Ihre spezifische Oberfläche beträgt etwa 9,5 m²/g.

Bei der mittleren Partikelgröße X handelt es sich um einen Medianwert (Index "50"). Der Partikeldurchmesser wurde mittels Laserbeugungsspektrometrie ermittelt, welches ein volumenbezogenes Verfahren darstellt und folglich eine Volumenverteilung (Index "3") liefert. Die spezifische Oberfläche wurde durch Ermittlung der Adsorptionsisothermen nach Brunauer/Emmet/Teller (BET) bestimmt.

### Beispiel 2:

10 g Hexogen (RDX) werden in 500 ml Aceton glöst. Die Lösung wird mittels einer Dosierpumpe mit einem Volumenstrom von 8 ml/min einerseits über eine Lavaldüse mit einem engsten Durchmesser von 100 µm, andererseits über eine Zweistoffdüse gemäß Fig. 1 mit einem Durchmesser der Düsenkanäle von jeweils etwa 100 µm feindispers in einen von überkritischem CO₂ im Gleichstrom durchströmten Hochdruckbehälter mit einem Volumen von 6 l eingesprüht. Der Massenstrom des CO₂ wird auf 2,2 g/s, der Druck auf 80 bar und die Temperatur auf 50°C eingestellt und jeweils aufrechterhalten. Das Kohlendioxid befindet sich folglich im nahekritischen Bereich oberhalb seines kritischen Punktes von 31 °C und 73 bar. Nach vollständigem Einsprühen der Lösung wird die Dosierpumpe abgestellt und der Hochdruckbehälter 20 min mit reinem CO₂ unter gleichbleibenden Bedingungen (200 bar, 50°C) gespült, um das in dem CO₂ gelöste Aceton zu entfernen und eine Adsorption an den gebildeten Explosivstoff-Partikeln beim Expandieren des Hochdruckbehälters zu verhindern. Anschließend wird der Hochdruckbehälter unter Aufrechterhalten des CO₂-Stroms mit einem Druckgradient von etwa -0,56 bar/s expandiert.

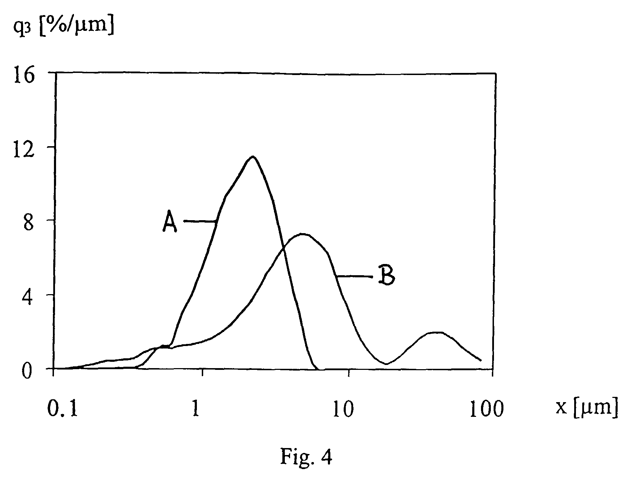

Wie aus Fig. 4 ersichtlich, haben die auf einem Sintermetallfilter abgeschiedenen, mittels der Lavaldüse erzeugten Kristalle eine mittlere Partikelgröße von X_{50,3} = 3,5 µm (Kurve B). Die Volumendichteverteilung q₃ der Kristalle weist bei der mittleren Partikelgröße von 3,5 µm ein Maximum von etwa 8 %/µm und bei einer Partikelgröße von etwa 40 µm ein weiteres Maximum von etwa 2 %/µm auf. Demgegenüber haben die mittels der Zweistoffdüse gemäß Fig. 1 erzeugten Kristalle eine mittlere Partikelgröße von nur etwa 1,6 µm (Kurve A), wobei das Spektrum der Volumendichteverteilung q₃ im Vergleich mit den mittels der Lavaldüse hergestellten Kristalle (Kurve B) erheblich enger ist und bei der mittleren Partikelgröße von 1,6 µm ein diskretes Maximum von etwa 12 %/µm aufweist. Es wurden ausschließlich Kristalle mit einer Partikelgröße zwischen etwa 0,6 und 6 µm erhalten (Kurve A), während die Partikelgröße der mittels der Lavaldüse hergestellten Kristalle (Kurve B) innerhalb eines Partikelgrößenbereichs von etwa 0,1 bis 100 µm streut. Die mittels der Zweistoffdüse erzeugten Explosivstoff-Partikel sind weitestgehend fehlstellenfrei und frei von Einschlüssen von Lösungsmitteln oder Gasen.

### Beispiel 3:

Zur Herstellung phlegmatisierter Partikel der leistungsstarken und empfindlichen Explosivstoffe Hexogen (RDK) und Oktogen (HMX) werden auf nachfolgend beschriebene Weise Mischkristalle hergestellt. 10 g RDX und 1,75 g HMX werden in 250 ml eines Lösungsmittelgemischs aus DMF und Aceton (Lösungsvermittler) gelöst. Die Lösung wird mittels einer Dosierpumpe mit einem Volumenstrom von 4 ml/min einerseits über eine Lavaldüse mit einem engsten Durchmesser von 100 µm, andererseits über eine Zweistoffdüse gemäß Fig. 1 mit einem Durchmesser der Düsenkanäle von jeweils etwa 100 µm feindispers in einen von überkritischem CO₂ im Gleichstrom durchströmten Hochdruckbehälter mit einem Volumen von 6 l eingesprüht. Der Massenstrom des CO₂ wird auf 2,8 g/s, der Druck auf 80 bar und die Temperatur auf 50 °C eingestellt und jeweils aufrechterhalten. Nach vollständigem Einsprühen der Lösung wird die Dosierpumpe abgestellt und der Hochdruckbehälter 20 min mit reinem CO₂ unter gleichbleibenden Bedingungen (200 bar, 50°C) gespült. Anschließend wird der Hochdruckbehälter unter Aufrechterhalten des CO₂-Stroms mit einem Druckgradient von etwa -0,56 bar/s expandiert.

Die auf einem Filter abgeschiedenen, mittels der Lavaldüse erzeugten Mischkristalle (Komposit-Partikel) aus RDX und HMX haben eine mittlere Partikelgröße von X_{50,3} = 12 µm und eine spezifische Oberfläche von 4,2 m²/g. Aufgrund zahlreicher Kristalldefekte wird eine nur geringe Phlegmatisierung der Explosivstoff-Partikel erreicht. Die mittels der Zweistoffdüse erhaltenen Komposit-Partikel weisen hingegen eine mittlere Partikelgröße von X_{50,3} = 5 µm und eine spezifische Oberfläche von 5,5 m²/g auf. Die Streubreite der Partikelgrößenverteilung ist geringer als die der mittels der Lavaldüse erzeugten Partikel; die Kristalle sind frei von Einschlüssen und haben ein homogenes Gefüge. Die phlegmatisierten Komposit-Partikel weisen eine geringere Sensibilität als reine RDX- und reine HMX-Partikel auf.

## Patentansprüche

1. Verfahren zur Herstellung feindisperser kristalliner Explosivstoffe, indem der Explosivstoff in wenigstens einem organischen Lösungsmittel in Lösung gebracht, die Lösung in wenigstens ein mit dem organischen Lösungsmittel zumindest teilweise mischbares überkritisches Fluid, in welchem der Explosivstoff nicht oder nur gering löslich ist, in einer Düsenströmung eingesprüht, das Lösungsmittel unter Auskristallisieren der Explosivstoff-Partikel von dem überkritischen Fluid aufgenommen wird und die Explosivstoff-Partikel nach Expandieren in einen für das überkritische Fluid unterkritischen Zustand abgetrennt werden, dadurch gekennzeichnet, daß die Lösung mittels einer Mehrstoffdüse oder durch wenigstens einen Düsenkanal einer Mehrstoffdüse in das überkritische Fluid eingesprüht wird, während in wenigstens einem weiteren Düsenkanal der Mehrstoffdüse ein Fluid zugeführt wird.

2. Verfahren nach Anspruch 1, dadurch gekennzeichnet, daß in dem weiteren Düsenkanal der Mehrstoffdüse ein überkritisches Fluid zugeführt wird.

3. Verfahren nach Anspruch 2, dadurch gekennzeichnet, daß dasselbe überkritische Fluid zugeführt wird, in welches die Lösung eingesprüht wird.

4. Verfahren nach Anspruch 1, dadurch gekennzeichnet, daß in dem weiteren Düsenkanal der Mehrstoffdüse ein Inertgas zugeführt wird.

5. Verfahren nach einem der Ansprüche 1 bis 4, dadurch gekennzeichnet, daß die Lösung unmittelbar nach Austreten aus dem Düsenkanal der Mehrstoffdüse mit dem in wenigstens einem benachbarten Düsenkanal zugeführten Lösung oder dem Fluid verwirbelt wird.

6. Verfahren nach Anspruch 5, dadurch gekennzeichnet, daß eine Mehrstoffdüse mit einem zentralen Düsenkanal und wenigstens einem diesen im wesentlichen ringförmig umgebenden Düsenkanal oder ein Düsenaggregat mit mehreren solcher Düsen verwendet wird.

7. Verfahren nach einem der Ansprüche 1 bis 4, dadurch gekennzeichnet, daß eine Düsenströmung der Lösung innerhalb der Düse mit wenigstens einer weiteren Düsenströmung der Lösung oder des Fluids verwirbelt wird.

8. Verfahren nach Anspruch 7, dadurch gekennzeichnet, daß eine Düse mit wenigstens einem im wesentlichen T-förmigen Düsenkanal verwendet wird.

9. Verfahren nach einem der Ansprüche 1 bis 8, dadurch gekennzeichnet, daß die Düsenströmung mittels einer Mehrstoffdüse nach Art einer Freistrahl- oder Kapillardüse erzeugt wird.

10. Verfahren nach einem der Ansprüche 1 bis 8, dadurch gekennzeichnet, daß die Düsenströmung mittels einer Mehrstoffdüse mit wenigstens einem Düsenkanal mit über dessen Länge variierendem Durchmesser, wie einer Lavaldüse, erzeugt wird.

11. Verfahren nach einem der Ansprüche 1 bis 10, dadurch gekennzeichnet, daß die Lösung unmittelbar vor Eintreten in den Düsenkanal, in dem Düsenkanal oder unmittelbar nach Austreten aus demselben mittels Ultraschallenergie in Schwingungen versetzt wird.

12. Verfahren nach Anspruch 11, dadurch gekennzeichnet, daß die Mehrstoffdüse mittels Ultraschallenergie in Schwingungen versetzt wird.

13. Verfahren nach einem der Ansprüche 1 bis 12, dadurch gekennzeichnet, daß das überkritische Fluid und die Sprühströmung der Lösung im Gleichstrom geführt werden.

14. Verfahren nach einem der Ansprüche 1 bis 12, dadurch gekennzeichnet, daß das überkritische Fluid und die Sprühströmung der Lösung im Gegenstrom geführt werden.

15. Verfahren nach einem der Ansprüche 1 bis 12, dadurch gekennzeichnet, daß das überkritische Fluid und die Sprühströmung der Lösung im Querstrom geführt werden.

16. Verfahren nach einem der Ansprüche 1 bis 15, dadurch gekennzeichnet, daß während der Expansion des mit dem Lösungsmittel beladenen überkritischen Fluids zum Abtrennen der Explosivstoff-Partikel frisches über- und/oder unterkritisches Fluid zugesetzt wird.

17. Verfahren nach einem der Ansprüche 1 bis 16, dadurch gekennzeichnet, daß das überkritische Fluid aus der Gruppe Kohlendioxid (CO₂), Distickstoffoxid (N₂O), Stickstoff (N₂), Wasser (H₂O), Ammoniak (NH₃), halogenierte Methane (CHₙX₄₋ₙ mit 0 ≤ n ≤ 3), halogenierte Ethane (C₂HₘX₆₋ₘ 0 ≤ m ≤ 5) ausgewählt und in reiner Form oder in Mischungen eingesetzt wird.

18. Verfahren nach einem der Ansprüche 1 bis 17, dadurch gekennzeichnet, daß dem überkritischen Fluid zur Erhöhung des Lösevermögens für das Lösungsmittel wenigstens ein Schleppmittel (Modifier) zugesetzt wird, in welchem der Explosivstoff nicht oder nur gering löslich ist und welches beim Expandieren des überkritischen Fluids in die Gasphase übergeht.

19. Verfahren nach einem der Ansprüche 1 bis 18, dadurch gekennzeichnet, daß dem Lösungsmittel zur Erhöhung des Lösevermögens für den Explosivstoff und/oder für das überkritische Fluid ein Lösungsvermittler (Entrainer) zugesetzt wird.

20. Verfahren nach einem der Ansprüche 1 bis 19, dadurch gekennzeichnet, daß zur Herstellung von aus wenigstens zwei Explosivstoffen bestehenden Explosivstoff-Partikeln (Komposit-Partikel) wenigstens zwei Explosivstoffe in dem organischen Lösungsmittel gelöst werden.

21. Verfahren nach einem der Ansprüche 1 bis 20, dadurch gekennzeichnet, daß die Partikelgröße des Explosivstoffs durch Variation der Parameter Druck, Temperatur, Konzentration der Lösung, Art des Lösungsmittels bzw. des überkritischen Fluids, Düsengeometrie und/oder Anströmung der Lösung beim Einsprühen in das überkritische Fluid eingestellt wird.

22. Verfahren nach einem der Ansprüche 1 bis 21, dadurch gekennzeichnet, daß das überkritische Fluid rezirkuliert wird.

23. Verfahren nach einem der Ansprüche 1 bis 22, dadurch gekennzeichnet, daß es kontinuierlich oder chargenweise durchgeführt wird.
